# EUROPÄISCHE PATENTSCHRIFT

(11) **EP 1 616 283 B1**
(45) Veröffentlichungstag und Bekanntmachung des Hinweises auf die Patenterteilung: **19.03.2008**
(21) Anmeldenummer: 04727861.9
(22) Anmeldetag: 16.04.2004
(51) Int. Cl.: G06K 1/12, B65H 15/00, G06K 13/07

(54) **LASER-BESCHRIFTUNGSSTATION FÜR KREDITKARTEN**
LASER INSCRIPTION STATION FOR CREDIT CARDS
STATION DE MARQUAGE AU LASER POUR DES CARTES DE CREDIT

(30) Priorität: 19.04.2003 DE 10317984
(43) Veröffentlichungstag der Anmeldung: 18.01.2006
(73) Patentinhaber: BÖWE CARDTEC GmbH, 33106 Paderborn (DE)
(72) Erfinder: JANTOS, Heinrich, 33154 Salzkotten (DE)
(74) Vertreter: Hanewinkel, Lorenz
(86) Internationale Anmeldenummer: PCT/EP2004/004025
(87) Internationale Veröffentlichungsnummer: WO 2004/095381

(56) Entgegenhaltungen:
- EP-A- 1 033 671
- DE-A- 10 147 037
- FR-A- 2 822 142
- US-A- 5 771 058
- US-B1- 6 279 901

## Beschreibung

Die Erfindung betrifft eine Vorrichtung zum Transportieren von Creditkarten in eine Beschriftungsposition eines in zwei Koordinaten und in seiner Intensität gesteuerten Laserstrahles, wobei zuführseitig und abführseitig jeweils ein lichtschrankengesteuertes angetriebenes Förder- und Andruckrollenpaar angeordnet sind und die Creditkarte in parallelen seitlichen Führungsbahnen ausgerichtet jeweils beschriftungsgerecht positioniert ist.

Es ist bekannt, Creditkarten mit einem rastergesteuerten Laserbrenner mit Schriftzeichen, Bildern, Symbolen usw. zu versehen, wobei sich die Karte in einer Beschriftungsposition im Strahlengang des Lasers befindet.

Die Karte wird gewöhnlich im Durchlaufverfahren über lichtschrankengesteuerten Rollenpaare angetrieben mehreren Bearbeitungsschritten nacheinander zugeführt. Wenn eine beidseitige Belaserung der Karte vorgenommen werden soll, ist eine der Stationen eine Wendevorrichtung, die die Karte im Pilgerschritt durchläuft. Nachteilig an der Rollenförderung ist, dass die Rollen die zu beschriftende Oberfläche der Karte teilweise überdecken, so dass eine Positionsveränderung vorgenommen werden muß, wenn die ganze Kartenoberfläche durchgehend belasert werden soll. Außerdem benötigt die Wendestation zusätzlichen Platz, der mindestens einer Kartenlänge entspricht, und demgemäß kommen zusätzliche Kartenlaufzeiten zum eigentlichen Wendevorgang hinzu.

Eine solche Vorrichtung ist z.B. aus US-5,771,058 bekannt.

Es ist Aufgabe der Erfindung, eine kürzere, schneller und präziser arbeitende einfachere Laserbeschriftungsstation zu schaffen.

Die Lösung besteht darin, dass die Führungsbahnen in einer Wendevorrichtung angeordnet sind, die zwischen den Rollenpaaren zusammen mit einem Transferförderer angeordnet ist, mit dem die Creditkarte zwischen den Rollenpaaren so weit verfahrbar ist, dass sie in einer ersten Transferposition aus dem Zuführrollenpaar in die Führungsbahnen eingeschoben ist, nur randseitig gehalten in einer zweiten Transferposition sich ganzflächig frei zugänglich zwischen den Rollenpaaren zur Laserbeschriftung befindet und in einer dritten Transferposition von dem Abführrollenpaar zu erfassen ist.

Vorteilhafte Ausgestaltungen sind in den Unteransprüchen angegeben.

In einer ersten Ausführung, die im einzelnen dargestellt ist, ist die Wendevorrichtung auf der Transfervorrichtung mitfahrend montiert. In einer zweiten Ausführung sind sowohl die Wendevorrichtung als auch die Transfervorrichtung basisfest montiert, so dass die Transfervorrichtung mit einem Greifer oder Exzentern die Karte symmetrisch zwischen den beiden Führungen angreifend verschiebt, jedoch während des Laserns nicht im optischen Feld und während des Wendens außerhalb des Wendebereichs der Karte ist. Eine sehr einfache Vorrichtung der letztgenannten Art verwendet einen Schieber, der ähnlich der Creditkarte von dem Rollenantrieb der Zuführrollen gesteuert vorgeschoben und zurückgezogen wird. Während des Karteneinlaufs wird der Schieber aus dem Rollenpaar herausgefahren abgelenkt und der Hinterkante der Karte folgend eingelenkt vorgeschoben.

Die erste Ausführung der Vorrichtung weist einen Käfig auf, an dessen beabstandeten Seitenplatinen die Führungsbahnen montiert sind, die aus kurzschenkligen U-Schienen bestehen, deren Schenkelweite wenig größer als die standardisierte Kartendicke von 0,8 cm ist, so dass die dazwischen befindliche Karte eben und eindeutig zu der Laservorrichtung positioniert ist und randseitig nur millimeterbreite unbeschriftbare Streifen verbleiben.

Die Seitenplatinen haben Ausnehmungen, damit die Achsen der Zu- und Abführrollen dort eintreten können, wenn die Karte abgeholt bzw. zugeliefert wird.

Der Käfig ist mit der Achse eines Wendegetriebes mittig der Führungsbahnen kreuzend verbunden. Das Wendegetriebe und dessen Wendeantriebsmotor sind auf dem Schlitten der Transfervorrichtung montiert. Der Schlitten ist auf der Schlittenbahn verschieblich gelagert und mit einem Antriebsriemen, der einerseits von einem Schrittmotor und andererseits von einer Umlenkrolle gehalten ist, verbunden.

Die Motoren sind Schrittmotoren und schrittmäßig angesteuert, wobei die Grundstellungen jeweils von Positionsmeldern der Steuerung signalisiert werden. Hinzu kommt die Auswertung der Lichtschrankensignale, die von den Creditkartenkanten front- und heckseitig ausgelöst werden, so dass die drei einzelnen Positionen und der Wendevorgang in Verbindung mit der Laservorrichtung folgerichtig angesteuert werden.

Die Abgaberolle und die Annahmerolle der Rollenpaare sind vorteilhaft aus elastischem gezahnten Material hergestellt, so dass das Kartenende bzw. der Kartenanfang ohne ein Klemmen freigegeben ist, solange der Transferantrieb die Karte bewegt und ansonsten die Rollenantriebe die Karte fest und sicher angreifen.

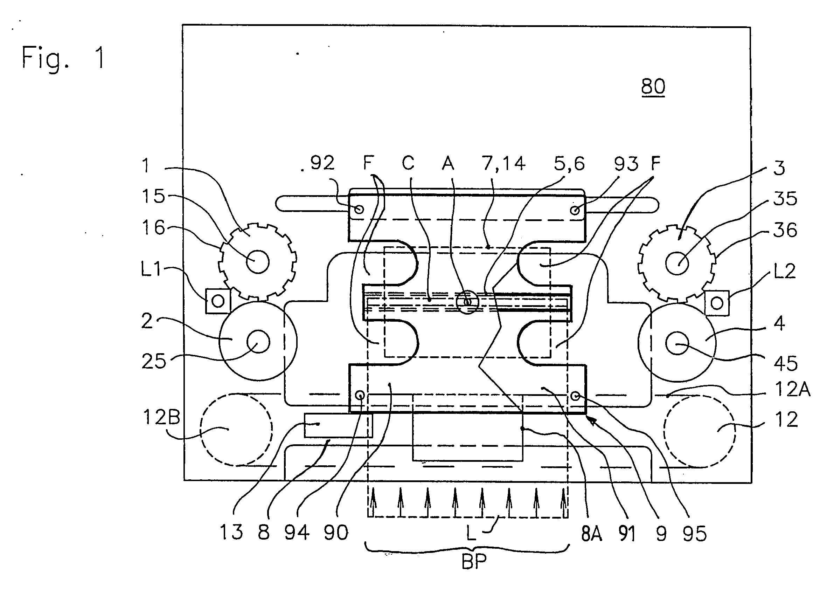

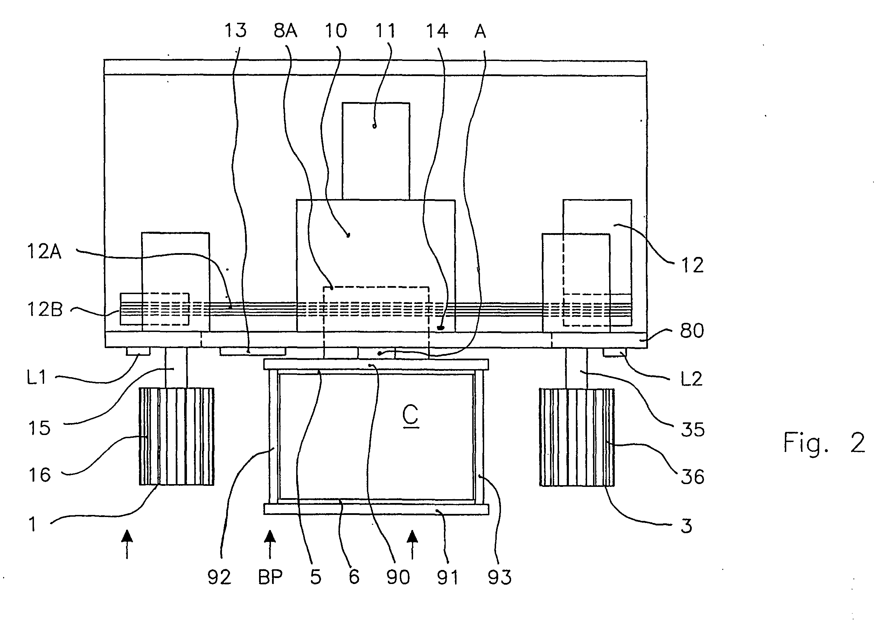

Vorteilhafte Ausgestaltungen sind in den Fig. 1 und 2 dargestellt.
- Fig. 1: zeigt eine Seitenansicht schematisch teilweise geöffnet.
- Fig. 2: zeigt eine Draufsicht schematisch teilweise geöffnet.

Fig. 1 zeigt eine gewöhnlich senkrecht stehende Montagewand 80 mit einem Zuführrollenpaar 1,2 und einem Abführrollenpaar 3,4, zu beiden Seiten eines Käfigs 9, der teilweise geöffnet gezeigt ist. Es besteht aus einer frontseitig und einer rückseitigen Platine 90, 91, die mit Abstandshaltern 92 - 95 so parallel zueinander gehalten sind, dass eine Creditkarte C, die strichpunktiert symbolisiert ist, zwischen diesen in U-förmigen horizontal angeordneten Führungsbahnen 5,6 verschieblich gehalten ist.

Die Platinen 90, 91 weisen an beiden Seiten Freiräume F auf, die ein Verschieben des Käfigs 9 mit seinen Führungsbahnen 5,6 bis an das eine bzw. andere Rollenpaar erlauben, wobei deren Achsen 15, 25, 35, 40 die Freiräume F durchsetzen. Hierzu ist der Käfig 9 mittels eines Wendetriebes auf einem Schlitten 8A angeordnet, der auf einer unten sichtbaren Schlittenbahn 8 verschieblich gelagert ist und mit einem Schlittenantrieb 12 antriebsmäßig verbunden ist. Der Schlittenantrieb 12 besteht aus einem Schrittmotor, der einen Zahnriemen 12A antreibt, der über ein Umlenkrad 12B am anderen Ende der Schlittenbahn 8 geführt ist. Ein Positionsmelder 13 gibt eine Schlitten-Grundposition an.

Es sind drei Transferpositionen des Schlittens bzw. der Wendevorrichtung 7 vorgesehen.

In der ersten Position steht der Käfig 9 so weit links, dass eine durch das Zuführrollenpaar 1, 2 hindurchgeförderte Creditkarte mittig in den Führungsbahnen 5, 6 abgelegt ist. Die obere Förderrolle 1 ist angetrieben und weist umfangsseitig eine achsparallele elastische Zahnung 16 auf, so dass die Karte in einer definierten Stellung die Rollen 1, 2 verläßt.

In der zweiten Position, der Beschriftungsposition BP, die dargestellt ist, befindet sich die Creditkarte C mit ihrer ganzen Oberfläche außerhalb der Rollen 1 - 4, so dass der schematisch angedeutete Laser-Scan-Bereich die ganze Karte abdeckt.

Nach dem Lasern der einen Kartenseite schwenkt die Wendevorrichtung 7 den Käfig 9 mit der Creditkarte C um dessen Mittelachse A, die die Führungsbahnen 5, 6 kreuzt. Dann beginnt eine zweite Laserung. Anschließend erfolgt ein weiterer Transfer in die dritte Position, in der die Creditkarte C in das abführende Rollenpaar 3, 4 eingreift. Auch dieses weist oben eine Antriebsrolle 3 mit einer elastischen Zahnung 36 auf, die eine exakte Kartenübernahme garantiert. Die Gegendruckrollen 2, 4 der Rollenpaare sind aus glattem Kunststoff hergestellt.

Lichtschranken L1, L2 bei den Rollenpaaren 1,2; 3,4 steuern jeweils den Rollenvorschub, solange die Karte C sich dazwischen befindet.

Fig. 2 zeigt eine Draufsicht zu Fig. 1. Man erkennt zusätzlich die teilweise hinter der Montagewand 80 angeordnete Wendevorrichtung 7, deren Achse A die Montagewand 80 in einem horizontalen Schlitz durchsetzt. Die Achse A befindet sich in einem Wendegetriebe 10, das von einem Wendeantrieb 11, einem Schrittmotor betätigt wird. Ein Positionsmelder 14 zeigt die Grundstellung des Käfigs 9 an, in der die Führungsbahnen 5, 6 zwischen den Spalten der Rollenpaare 1,2; 3,4 ausgerichtet sind.

Die gesamte Vorrichtung baut relativ kurz. Die Abstandshalter 92 - 95 liegen vor und hinter der Kartenoberfläche, damit das Laserfeld frei ist. Die Abstandshalter müssen vor den Antriebsrollenpaaren 1,2; 3,4 beim Wandern des Käfigs 9 vorbeigedreht werden können, wodurch sich der Mindestabstand der Rollenpaare ergibt. Die Kartenbewegungen beim Transfer und beim Wenden sind jeweils nur in einer Richtung, jedoch muß die Wendevorrichtung um den Transferweg der Karte zurückgeführt werden, ehe sie eine neue Karte aufnimmt. Dieser Transferweg ergibt sich aus dem Mindestabstand der Rollenpaare minus der Kartenlänge; er ist, wie das Beispiel zeigt, kürzer als diese.

### Bezugszeichenliste

- 1: Zuführantriebsrolle
- 2: Zuführandruckrolle
- 3: Abführantriebsrolle
- 4: Abführandruckrolle
- 5: 1. Führungsbahn der Karte
- 6: 2. Führungsbahn der Karte
- 7: Wendevorrichtung
- 8: Schlittenbahn - Transferförderer
- 8A: Schlitten
- 9: Käfig
- 10: Wendegetriebe
- 11: Wendeantrieb
- 12: Schlittenantrieb
- 12A: Zahnriemen
- 12B: Umlenkrad
- 13: Positionsmelder - Schlitten
- 14: Positionsmelder - Wendevorrichtung
- 15,25,35,35: Achsen von 1,2,3,4
- 16: Zahnung in 1
- 36: Zahnung in 3
- 80: Montagewand

- 90: Platinen des Käfigs 9
- 91: Platinen
- 92 - 95: Abstandshalter von 9

- A: Achse der Wendevorrichtung
- BP: Beschriftungsposition
- C: Creditkarte
- F: Freiräume in 90, 91
- L1: Lichtschranken
- L2: Lichtschranken
- L: Laser-Scan-Bereich

## Patentansprüche

1. Vorrichtung zum Transportieren von CreditKarten in eine Beschriftungsposition (BP) eines in zwei Koordinaten und in seiner Intensität gesteuerten Laserstrahles, wobei zuführseitig und abführseitig jeweils ein lichtschrankengesteuertes angetriebenes Förder- und Andruckrollenpaar (1,2; 3,4) angeordnet sind und die Creditkarte (C) in parallelen seitlichen Führungsbahnen (5, 6) ausgerichtet jeweils beschriftungsgerecht positioniert ist,
**dadurch gekennzeichnet, dass** die Führungsbahnen (5, 6) in einer Wendevorrichtung (7) angeordnet sind, die zwischen den Rollenpaaren (1,2; 3,4) zusammen mit einem Transferförderer (8, 12) angeordnet ist, mit dem die Creditkarte (C) zwischen den Rollenpaaren (1,2; 3,4) so weit verfahrbar ist, dass sie in einer ersten Transferposition aus dem Zuführrollenpaar (1, 2) in die Führungsbahnen eingeschoben ist, nur randseitig gehalten in einer zweiten Transferposition sich ganzflächig frei zugänglich zwischen den Rollenpaaren (1,2; 3,4) zur Laserbeschriftung befindet und in einer dritten Transferposition von dem Abführrollenpaar (3, 4) zu erfassen ist.

2. Vorrichtung nach Anspruch 1, **dadurch gekennzeichnet, dass** die Wendevorrichtung (7) auf dem Transferförderer (8, 12) angeordnet ist, der ein Schlitten (8A) auf einer Schlittenbahn (8) ist, der mit dem Schlittenantrieb (12) verbunden ist.

3. Vorrichtung nach Anspruch 1, **dadurch gekennzeichnet, dass** die Wendevorrichtung (7) und die Transfervorrichtung feststehend montiert sind und die Transfervorrichtung die Creditkarte (C) jeweils symmetrisch zwischen den Führungsbahnen (5, 6) mit einem Greifer positioniert und sie beim Wenden freigibt.

4. Vorrichtung nach Anspruch 3, **dadurch gekennzeichnet**, das der Greifer antriebsmäßig mit den Zuführantriebsrollen (1, 2) kuppelbar ist.

5. Vorrichtung nach Anspruch 2, **dadurch gekennzeichnet, dass** die Führungsbahnen (5, 6) sich in einem Käfig (9) befinden; der an einer Drehachse (A) eines Wendegetriebes (10) montiert ist, das mit einem motorischen Wendeantrieb (11) auf der Schlittenbahn (8) gelagert ist, und dass die Drehachse (A) verlängert die beiden Führungsbahnen (5, 6) je etwa mittig kreuzt.

6. Vorrichtung nach einem der vorstehenden Ansprüche, **dadurch gekennzeichnet, dass** die Führungsbahnen (5, 6) niedrige U-Profile sind, deren Weite in loser Passung der genormten Kartendicke entspricht.

7. Vorrichtung nach einem der vorstehenden Ansprüche, **dadurch gekennzeichnet, dass** die Führungsbahnen (5, 6) jeweils auf Platinen (90, 91) angeordnet sind, die durch Abstandshalter (92 - 95) parallel distanziert gehalten sind und jeweils neben den Führungsbahnen (5, 6) Freiräume (F) für den Durchtritt von Antriebsachsen (15,25; 35,45) der Rollenpaare (1, 2; 3,4) belassen.

8. Vorrichtung nach einem der vorstehenden Ansprüche, **dadurch gekennzeichnet, dass** der Schlittenantrieb (12) und der Wendeantrieb (11) Schrittmotoren enthalten, die die drei Transferpositionen und beide Wendestellungen der Creditkarte (C) jeweils schrittgesteuert relativ zu Bezugspositionen, die von Positionsmeldern (13, 14) signalisiert werden, folgerichtig ansteuern.

9. Vorrichtung nach einem der vorstehenden Ansprüche, **dadurch gekennzeichnet, dass** die Antriebsrollen (1, 3) jeweils eine Zahnung (16, 36) aus elastischem Material aufweisen.

10. Vorrichtung nach einem der vorstehenden Ansprüche, **dadurch gekennzeichnet, dass** die Rollenpaare (1,2; 3,4) und die Schlittenbahn (8) an einer vertikal stehenden Montagewand (80) zusammen mit den Rollenantrieben, den Lichtschranken (L1, L2) und Positionsmeldern (13, 14) sowie dem Schlittenantrieb (12) montiert sind.

11. Vorrichtung nach Anspruch 10, **dadurch gekennzeichnet, dass** der Schlittenantrieb (12) aus einem Schrittmotor und einem umgelenkten Zahnriemen besteht.

12. Vorrichtung nach einem der vorstehenden Ansprüche, **dadurch gekennzeichnet, dass** die Antriebsmotoren der Antriebsrollen (1, 3) des Wendeantriebes (11) und des Schlittenantriebes (12) über eine Steuervorrichtung betrieben werden, die jeweils das Erreichen der Beschriftungsposition (BP) und der beiden Wendestellungen an eine Laserbeschriftungssteuerung abgeben und ein von dieser kommendes Fertigsignal auswerten.

## Claims

1. A device for transporting credit cards into an inscription station (BP) of a laser beam that is controlled in terms of two coordinates and its intensity, wherein one photoelectric barrier-controlled driven pair of transport and pressure rollers (1,2; 3,4) is disposed in each case on the infeed side and outfeed side, and the credit card (C) is properly positioned for inscribing in each case aligned in parallel lateral guide tracks (5, 6),
**characterized in that** the guide tracks (5, 6) are disposed in a turning means (7), which is disposed between the roller pairs (1,2; 3,4) together with a transfer conveyor (8, 12) whereby the credit card (C) is displaceable between the roller pairs (1,2; 3,4) to such an extent that it is inserted in a first transfer position from the pair of infeed rollers (1, 2) into the guide tracks, is situated retained only at its edges in a second transfer position between the roller pairs (1,2; 3,4) with its entire surface freely accessible for laser inscribing, and can be seized in a third transfer position by the pair of outfeed rollers (3, 4).

2. A device according to claim 1, **characterized in that** the turning means (7) is disposed on the transfer conveyor (8, 12), which is a cradle (8A) on a cradle track (8), which is connected to the cradle drive (12).

3. A device according to claim 1, **characterized in that** the turning means (7) and the transfer means are mounted stationary and the transfer means in each case symmetrically positions the credit card (C) between the guide tracks (5, 6) by means of a gripper and releases it during the turning process.

4. A device according to claim 3, **characterized in that** the gripper is coupleable in terms of a drive to the infeed drive rollers (1, 2).

5. A device according to claim 2, **characterized in that** the guide tracks (5, 6) are situated in a cage (9), which is mounted on a rotational axis (A) of a turning mechanism (10), which is supported with a motor-driven turning drive (11) on the cradle track (8), and that the rotational axis (A) in its extension crosses the two guide tracks (5, 6) in each case approximately in the center.

6. A device according to any of the above claims, **characterized in that** the guide tracks (5, 6) are low U-shaped sections whose width corresponds in a loose fit to the standardized card thickness.

7. A device according to any of the above claims, **characterized in that** the guide tracks (5, 6) are disposed in each case on plates (90, 91), which are held at a parallel distance from one another by means of spacers (92 - 95), and clearance areas (F) are left in each case adjacent to the guide tracks (5, 6) for the drive shafts (15, 25; 35, 45) of the roller pairs (1, 2; 3, 4) to pass through.

8. A device according to any of the above claims, **characterized in that** the cradle drive (12) and the turning drive (11) contain step motors that actuate in each case in the correct sequence the three transfer positions and both turning positions of the credit card (C) in a step-by-step manner relative to reference positions being signaled by position indicators (13, 14).

9. A device according to any of the above claims, **characterized in that** the drive rollers (1, 3) in each case have a toothing (16, 36) of an elastic material.

10. A device according to any of the above claims, **characterized in that** the pairs of rollers (1, 2; 3, 4) and the cradle track (8) are mounted on a vertically positioned mounting wall (80) together with the roller drives, the photoelectric barriers (L1, L2) and position indicators (13, 14), as well as the cradle drive (12).

11. A device according to claim 10, **characterized in that** the cradle drive (12) consists of a step motor and a deflected toothed belt.

12. A device according to any of the above claims, **characterized in that** the drive motors of the drive rollers (1, 3) the turning drive (11) and the cradle drive (12) are operated via a control means that report in each case the reaching of the inscribing position (BP) and of the two turning positions to a laser inscribing control unit and process a completion signal coming from same.

## Revendications

1. Dispositif pour transporter des cartes de crédit dans une position de marquage (BP) par un rayon laser commandé dans deux coordonnées et à intensité réglable, dans lequel respectivement une paire de galets moteurs et presseurs (1,2; 3,4) est arrangée du coté d'aménage et du coté de sortie, les galets étant commandés par une barrière lumineuse et entraînés, et dans lequel la carte de crédit (C) est positionnée dans des glissières de guidage latérales (5, 6) pour le marquage, **caractérisé en ce que** les glissières de guidage (5, 6) sont arrangées dans un dispositif de renversement (7) qui, avec un convoyeur de transfert (8, 12), est disposé entre les paires de galets (1,2 ; 3,4), ledit convoyeur permettant de déplacer la carte de crédit (C) entre les paires de galets (1,2; 3,4) ainsi que, dans une première position de transfert, elle sort de la paire de galets d'aménage (1, 2) et est insérée dans les glissières de guidage, dans une deuxième position de transfert elle est située entre les paires de galets (1,2 ; 3,4), sa surface entière étant librement accessible pour la marquage à laser, et dans une troisième position de transfert elle peut être saisie par la paire de galets de sortie (3, 4).

2. Dispositif selon la revendication 1, **caractérisé en ce que** le dispositif de renversement (7) est situé sur le convoyeur de transfert (8, 12), ce dernier étant un coulisseau (8A) sur une glissière de coulisseau (8), raccordé avec la commande du coulisseau (12).

3. Dispositif selon la revendication 1, **caractérisé en ce que** le dispositif de renversement (7) et le dispositif de transfert sont montés fixement et le dispositif de transfert, à l'aide d'une griffe, place la carte de crédit (C) dans sa position dans chaque cas symétrique entre les glissières de guidage (5, 6) et la libère pendant le renversement.

4. Dispositif selon la revendication 3, **caractérisé en ce que** la griffe peut être accouplé avec les galets moteurs d'aménage (1, 2) en ce qui concerne l'entraînement.

5. Dispositif selon la revendication 2, **caractérisé en ce que** les glissières de guidage (5, 6) sont situées dans une cage (9), qui est montée sur un axe de rotation (A) d'un engrenage de renversement (10), qui, avec une commande de renversement (11), est supporté sur la glissière de coulisseau (8), et **en ce que** l'axe de rotation (A) prolongé croise chacune des deux glissières de guidage (5, 6) approximativement au centre.

6. Dispositif selon l'une des revendications précédentes, **caractérisé en ce que** les glissières de guidage (5, 6), sont des profilés en U bas, dont la largeur correspond à l'épaisseur standard de la carte dans un ajustage libre.

7. Dispositif selon l'une des revendications précédentes, **caractérisé en ce que** les glissières de guidage (5, 6), sont dans chaque cas arrangées sur des platines (90, 91), qui sont maintenues en parallèle et à une distance par des écarteurs (92 - 95) et qui laissent libre des échancrures (F) à côté de chacune des glissières de guidage (5, 6) pour la passage des arbres de commande (15,25 ; 35,45) des paires de galets (1, 2; 3,4).

8. Dispositif selon l'une des revendications précédentes, **caractérisé en ce que** la commande du coulisseau (12), et la commande de renversement (11) contiennent des moteurs pas à pas, qui dirigent la carte de crédit (C) dans ses trois positions de transfert et ses deux positions de renversement, dans une succession de positions correcte, dans chaque cas commandées pas à pas, relatives à des positions de référence signalés par des capteurs de position (13, 14).

9. Dispositif selon l'une des revendications précédentes, **caractérisé en ce que** chacun des galets moteurs (1, 3) dispose d'une denture (16, 36) en matériau élastique.

10. Dispositif selon l'une des revendications précédentes, **caractérisé en ce que** les paires de galets (1,2 ; 3,4) et la glissière du coulisseau (8) sont montées sur une paroi de montage (80) verticale, avec les commandes de galets, les barrières lumineuses (L1, L2) et les capteurs de position (13, 14) et avec la commande du coulisseau (12).

11. Dispositif selon la revendication 10, **caractérisé en ce que** la commande du coulisseau (12) se compose d'un moteur pas à pas et d'une courroie dentée renversée.

12. Dispositif selon l'une des revendications précédentes, **caractérisé en ce que** les moteurs de commande des galets moteurs (1, 3), de la commande de renversement (11) et de la commande du coulisseau (12) sont actionnés via un contrôleur qui signale la réalisation de la position de marquage (BP), et respectivement la réalisation des deux positions de renversement, à une contrôle de marquage à laser et évalue un signal d'achèvement provenant de cette dernière.
